# EUROPEAN PATENT SPECIFICATION

(11) **EP 2 914 364 B1**
(45) Date of publication and mention of the grant of the patent: **02.01.2019**
(21) Application number: 13851869.1
(22) Date of filing: 31.10.2013
(51) Int. Cl.: B01D 46/10, B01D 27/08, B01D 29/11, B01D 29/66, B01D 45/02, B01D 46/54, B04C 5/081, B04C 7/00, B01D 46/00

(54) **A COMPACT FILTER BASED DUST COLLECTOR FOR HAZARDOUS DUST**
AUF KOMPAKTFILTER BASIERENDER STAUBABSCHEIDER FÜR AGGRESSIVEN STAUB
COLLECTEUR DE POUSSIÈRE À FILTRE COMPACT POUR POUSSIÈRE NOCIVE

(30) Priority: 01.11.2012 SE 1200667; 03.10.2013 SE 1300626
(43) Date of publication of application: 09.09.2015
(73) Proprietor: CentriClean Systems AB, 146 33 Tullinge (SE)
(72) Inventor: HÄLLGREN, Hans Ingvar, 147 41 Tumba (SE)
(86) International application number: PCT/SE2013/000168
(87) International publication number: WO 2014/070063

(56) References cited:
- WO-A1-91/08822
- WO-A1-2013/052000
- DE-C- 849 950
- DE-U1- 29 617 150
- US-A- 3 256 679
- US-A- 3 256 679
- US-A- 3 698 555
- US-A- 3 699 750
- US-A- 4 820 315
- US-A- 5 845 782
- US-A1- 2007 199 284
- US-A1- 2007 199 284
- US-A1- 2011 094 052
- US-A1- 2012 151 710

## Description

This invention relates to a back-flushable dust collector for hazardous dust, for example asbestos and silica dust, with an integrated pre-separator function.

Today, the majority of dust collectors are based on some kind of filter technology with a filter medium consisting of socks, or so-called folded cartridge filters, usually integrated in a container with an inlet similar to a tangential cyclone inlet.
One major disadvantage with the above filter technology is that the handling of the contaminated filter medium exposes the area and persons involved for very dangerous dust, for example asbestos and silica. In concrete floor grinding it is common that the dust collector filter is clogged and most of the dust is left on the floor and the operator, who is paid per square meter, starts cleaning the filters by hand, either by shaking the filter medium against the floor or with some tool. Quite a messy job. Some dust collectors of prior art, has a cleaning option called depression valve, which usually consists of a lever the operator can use repeatedly to release the vacuum and hopefully make the dust cakes fall of the filter medium. This method is obsolete and just delays the final cleaning of the filter medium, as described above. A better method is back-flushing with compressed air, which has shown to be able to keep a cartridge filter at a constant pressure drop. However in the floor grinding sector, you can not expect to have access to compressed air out on working sites and customers do not want to handle big compressors. Another problem is that the filter medium is overloaded with dust, for example in floor grinding, causing the need for an extra pre-separator device relieving the filter medium from too much dust load.

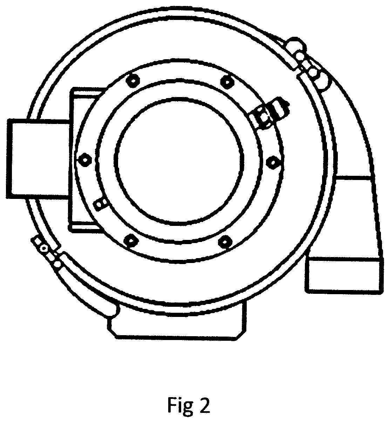

The present invention solves at least some of the problems mentioned above by having the features stated in claim 1.
Examples of embodiments of the invention are shown in Figure 1-3, described below.
Figure 1A is a side view of the dust collector, with one dust bag, configured according to an exemplifying embodiment of the herein disclosed technology in an operating configuration.
Figure 1B is a side view of the dust collector, with two dust bags, configured according to an exemplifying embodiment of the herein disclosed technology in an operating configuration.
Figure 2 is a top plan view of the dust collector of Figure 1.
Figure 3 is a side view of the dust collector equipped with two dust bags, configured with a top mounted fan, according to an exemplifying embodiment of the herein disclosed technology in a switched off and back flushed configuration.

### Prior art

DE 849950 represents the closest prior art showing some features in the present application, i.e. a filter based dust collector with an integrated cyclonic pre-separator, an inlet for dusty gas and an outlet for cleaned gas, a cyclone body for pre-separation and an internal filter chamber equipped with a cartridge filter for final cleaning, where the filter chamber is communicating with the inlet for dusty gas.
DE 29617150 shows the same features, but lacks the internal filter chamber feature. Other configurations shown have no integrated pre-separation function, but have such devices mounted on the side and are therefore less relevant here.
WO 2013/052000 A1 disclose only an integrated two stage cyclone pre-separator and has no filter for final cleaning. However the idea behind the dust handling system is used in the present application. This system collects dust from two different separation processes, having different pressures, into one dust bag 6, with the help of a rubber valve 12.

### Detailed description

The present invention utilize a dust collector solution that eliminates the problem of exposing people to dangerous dust, through dividing the dust collector into one permanent fixed clean part and one dismountable contaminated part, which can be changed without the risk for any exposure to the environment. The so called contaminated part can then be cleaned and reloaded with a new filter in a special room or device intended for this purpose. Alternatively, the contaminated part may be designed and made of a disposable material, so the whole contaminated part may be disposed of after use and be replaced with a new one.

Such a fiter based collector intended to catch also the smallest and most dangerous particles, should not be exposed to large amounts of dust, since the filter part clogs very fast and needs to be cleaned, which slow down the work. Previously, this has been solved by protecting the collector by a stand-alone pre-separator unit, usually some type of cyclone, taking approximately 85% of the dust. However for small and medium sized dust collecting appliances this is too bulky and costly to meet the market demand. The present invention solves this by integrating a particle filter inside a cyclone, forming a compact unit. Depending on the efficiency of the cyclone and amount and type of dust, the filter medium has to be cleaned in certain intervals, in order to reduce the increased pressure resistance over it, which eliminates the sucking force of the system. One example of a context where a dust collector according to the invention could be applied is, for example in association with concrete floor grinding. Such a collector system, according to the invention, can be designed as follows.

A dust collecting system for floor grinding

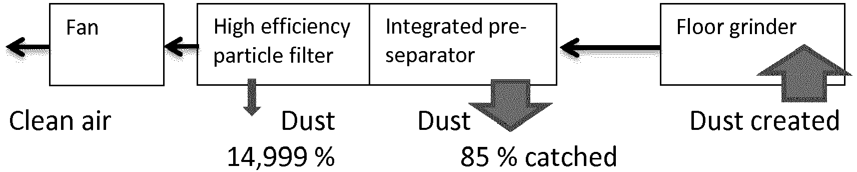

In the above example the particle filter is integrated with the pre-separator into one compact unit, while the fan is stand-alone. However in other embodiments, the fan could also be integrated into the same unit e.g. in order to save cost and for better handling characteristics.
Typically a prior art dust collecting system, comprising a stand alone collecting cyclone as pre-separator, shows 3kPa constant pressure drop over the grinding machine and hose, 1 kPa over the collecting cyclone pre separator and 1 kPa over a clean high efficiency filter medium and up to 3 kPa over a clogged one, that needs to be cleaned.
In the present invention the filter medium cleaning is done by means of back-flushing with compressed air. In the case of a movable dust collector for floor grinding, a small mini-compressor is fitted to the unit, feeding compressed air to a pressure vessel integrated into the dust collector or immediately on the outside, in order to deliver an instant powerful shock wave into the filter medium arrangement, for example a cartridge filter, which cleans the filter and deliver the dust cakes down to a dust container with two chambers or two separate dust bags, one for the cyclone and one for the filter unit.
Different strategies can be used to choose the number of flushes and the interval between them, for example the pressure drop after the filter or over the filter can activate the back-flush procedure. A small PLC computer controlling the back flushes, can then check if the flushes were effective and if not, flush some more and/or make the cleaning more effective by releasing the pressure difference over the filter medium, via a relief or block valve for a short while, when the system back flushes. For normal light floor grinding it is normally enough to back flush e.g. twice a minute and then once when the operator stops the fan and the vacuum just is disappearing, but before the dust bag is removed.
In a dust collector system suitable for floor grinding the PLC can also control the electric phase order and if found wrong correct the order, so the fan will suck and not cause a blow out of dust. Further the PLC can monitor, direct or indirect via the current, the temperature in the fan and motor and stop the fan when a specific temperature is reached. Overheating is a common failure cause in the working field.

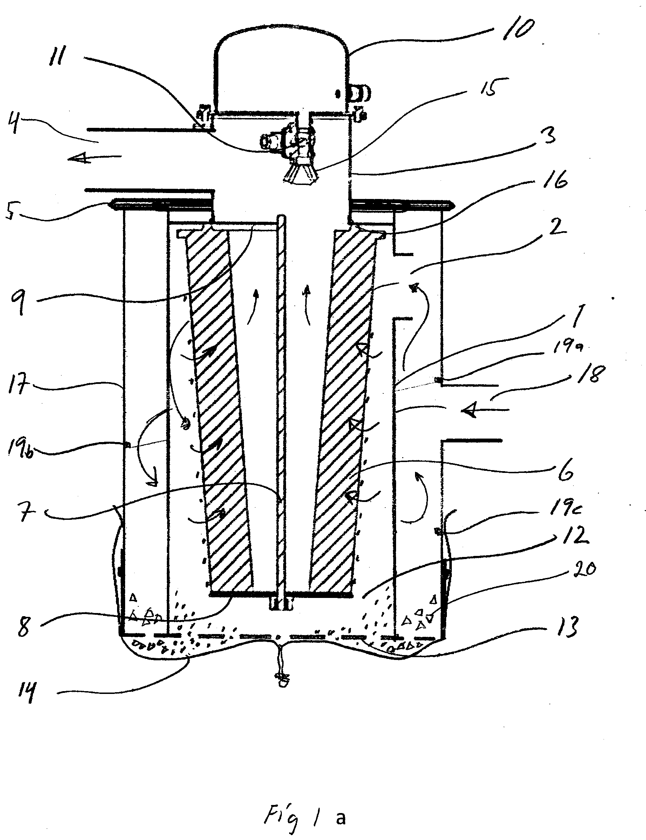

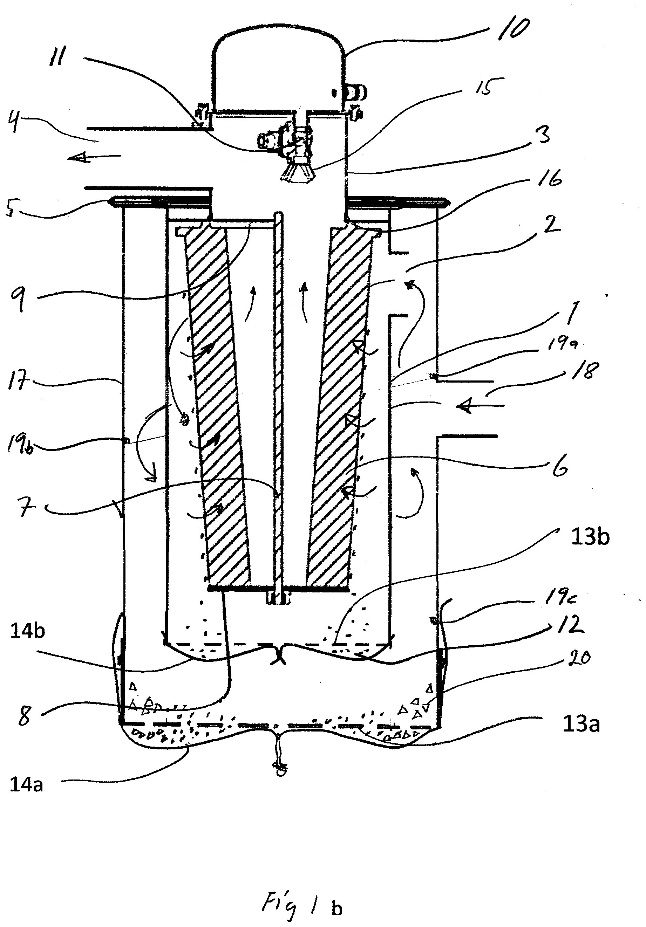

An exemplifying dust collector, in a version with two dust bags, illustrated in figure 1b, comprises of an outer cyclone body 17, which internally contains a filter medium 6 integrated into a filter body 1. The dusty gas first enters an outer inlet 18, preferably tangentially connected to the cyclone body 17 and preferably pointing downward, whereby the major part of the dust swirls down towards an outer dust chamber 20, in some cases with the help of a spiral vane 19a to 19c, mounted inside the cyclone body 17. The now partially cleaned gas, then turns up and enters the integrated filter medium 6 through one or several inlets 2, which preferably are tangential in relation to the nearby main flow direction.
The filter body 1 represents one part of the dust collector which is contaminated with dust particles. Further connected to the filter body 1 is an outlet chamber 3, representing a clean side of the dust collector, having an outlet 4 for cleaned fluid. The contaminated part of the dust collector can be separated from the clean part by releasing a coupling 5. This coupling could be e.g. a V-clamp or similar.
Inside the filter body 1, the filter medium 6, which may be conical or straight, is arranged and fixed with a centric shaft 7 in a way such that the filter medium 6 form a barrier between the contaminated and the clean side of the dust collector, by means of a bottom sealing plate 8 and a sealing device 16 in an upper plate with spokes 9 in the center, letting the clean fluid pass up in an outlet chamber 3 and further to the outlet 4.
The outlet chamber 3 is connected to a pressure vessel 10, containing a compressed gas, for example air and is communicating with the clean part of the filter medium 6, via a valve 11 and a high velocity nozzle part 15 containing one or several nozzles, which clean the filter medium 6 through back flushing it from the inside with high velocity gas bursts.

As mentioned above the dust enters the filter body 1 through the inlet 2 and is then trapped by the filter medium 6. It is here implicitly understood that the outlet 4 is connected to a suction device, such as a fan or some other device driving the flow through the dust collector.

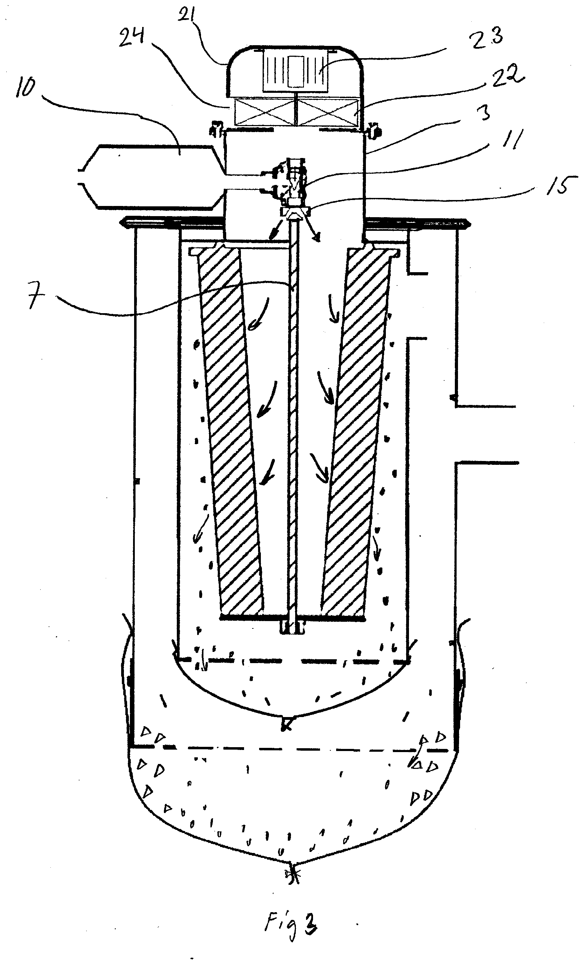

After some time of operation, the filter medium 6 will be covered with a dust layer and the pressure drop over the filter medium 6 will go up and it is time to clean the filter medium 6 by one or more back flush gas bursts. This can be done during operation, but is preferably done after the flow is shut off, which is more effective, whereby the dust falls down into a dust chamber 12 and further down through a dismountable grid device 13b into a dust bag 14b. The dust collected in the outer dust chamber 20, then in a switched off condition, falls through another dismountable grid device 13a into a dust bag 14a or a tight dust canister compartment. During normal operation both dust bags are sucked up against the grid devices 13a, 13b, with the already collected dust still in the dust bags 14a, 14b. Thereby the bag 14a creates a lock and seal against the atmosphere by blocking the grid 13a and further the bag 14b creates a lock and seal between the two dust chambers 12 and 20 by blocking the grid 13b. This is important since dust chamber 12 has a lower static pressure than dust chamber 20 and a leak over of dust must be avoided. Another exemplifying embodiment of the invention can have a fan unit 21 integrated in the design. That is, the fan can form part of the dust collector instead of being a stand-alone unit. An example of such an embodiment with an integrated fan is illustrated in figure 3. The cleaned gas then leaves the outlet chamber 3 by means of the fan 22 driven by a motor 23, through an outlet 24. In this embodiment the pressure vessel 10 is moved from its top position, preferably to a side position. The valve 11 and the high velocity nozzle part 15 are in this embodiment fixed to the centric shaft 7, in order to take up the reaction force from the air bursts.

## Claims

1. A filter based dust collector with an integrated pre-separation function, consisting of an outer cyclone body (17) acting as a pre-separator and forming an outer dust chamber (20), which internally contains a filter medium (6) positioned in a filter body (1) forming an inner dust chamber (12), the filter body has an inlet (2) for partly cleaned gas and is connected to an outlet chamber (3) with an outlet (4) for cleaned gas and the filter medium (6) is dividing the dust collector flow paths into a clean and a contaminated side and the outer cyclone body (17) having an outer inlet (18) for contaminated gas, communicating with the inlet (2), **characterized by** having a combined dust storage and lock function by means of a dust bag (14) sucked up against a grid (13) during operation, or two dust bags (14a) and (14b) sucked up against two different grids (13a) and (13b) respectively during operation; where in case of one grid, this grid (13) is serving as bottom of both the outer dust chamber (20) and the inner dust chamber (12), both connected to one common dust bag (14), which together with the grid (13), fulfills a lock function to the atmosphere and also between the two dust chambers (20) and (12) and, in case of two grids, a first grid (13a) serves as bottom of the outer dust chamber (20), connected to a first dust bag (14a) and a second grid (13b) serves as bottom of the inner dust chamber (12), connected to a second dust bag (14b), such that the first grid (13a) together with the first dust bag (14a) fulfills a lock function to the atmosphere and the second grid (13b) together with the second dust bag (14b), fulfills a lock function between the two dust chambers (20) and (12).

2. A filter based dust collector according to claim 1, where a contaminated part of the dust collector can be separated from a clean part by releasing a coupling (5) arranged between the contaminated and the clean part.

3. A filter based dust collector according to any of the preceding claims, where the whole contaminated side is made in a low cost disposable material.

4. A filter based dust collector according to any of the preceding claims, further comprising a back-flush arrangement consisting of a valve (11), communicating with an integrated pressure vessel (10) on one side and a high velocity nozzle part (15) on the clean side of the filter medium (6).

5. A filter based dust collector according to claim 4, where the valve (11) is controlled by a programmable PLC-controller, adapting the back-flushing frequency to the pressure difference built up over the filter medium (6).

6. A filter based dust collector according to claim 5, **characterized** through that the PLC-controller also controls a relief valve or a blocking valve, eliminating the pressure difference over the filter medium a short while, when the filter medium is back flushed.

7. A filter based dust collector according to claim 5 or 6, where the PLC-controller is used in making the system fail safe through controlling the phase order in the power socket and correct the order if wrong and also controlling the fan and motor temperature, direct or indirect via the current and stop the motor before it overheats.

8. A filter based dust collector according to any of the above claims, where the inlet (2) consists of two or more openings, in order to spread out the dust around the filter medium (6).

9. A filter based dust collector according to any of the preceding claims, where the inlet (2) has at least one opening, tangentially oriented in order to create extra cyclonic effect and relieve the filter medium (6) from dust overload in the vicinity of the inlet (2).

10. A filter based dust collector according to any of the above claims, where the filter medium (6) has a bigger diameter in the end close to the inlet (2), which speeds up the gas flow giving a better dust distribution over the filter medium (6).

11. A filter based dust collector according to any of the above claims, further having a spiral vane (19a), (19b), (19c) going from a position (19a) above the outer inlet (18) and extending downward to a position (19c) in the outer dust chamber (20), forcing the dust particles collected against the inner wall of the cyclone body (17), to slide downwards against the inner wall towards the outer dust chamber (20), at the same time the particles are shaded by the vane and not affected by the upward going gas flow aiming the inlet (2).

## Patentansprüche

1. Ein filterbasierter Staubsammler mit integrierter Vortrennfunktion, bestehend aus einem äußeren Zyklonkörper (17), der als Vorabscheider wirkt und eine äußere Staubkammer (20) bildet, welches intern ein Filtermedium (6) enthält, das in einem Filterkörper (1) positioniert ist, der eine innere Staubkammer (12) bildet, der Filterkörper hat einen Einlaß (2) für teilweise gereinigtes Gas und ist mit einer Auslaßkammer (3) mit einem Auslaß (4) für gereinigtes Gas verbunden und die Filtermedium (6) teilt die Staubkollektorströmungswege in eine saubere und eine kontaminierte Seite und den äußeren Zyklonkörper (17) hat einen äußeren Einlaß (18) für kontaminiertes Gas, der mit dem Einlaß (2) in Verbindung steht, **gekennzeichnet durch** eine kombinierte Staubspeicher- und Sperrfunktion mittels einem Staubbeutel (14), der während des Betriebs gegen ein Gitter (13) angesaugt wird, oder zwei Staubbeutel (14a) und (14b), die gegen zwei verschiedene Gitter (13a) und (13b) abgesaugt werden jeweils während des Betriebs; wobei im Falle eines Gitters dieses Gitter (13) als Boden sowohl der äußeren Staubkammer (20) als auch der inneren Staubkammer (12) dient, die beide mit einem gemeinsamen Staubbeutel (14) verbunden sind, welches zusammen mit dem Gitter (13) eine Sperrfunktion gegenüber der Atmosphäre und auch zwischen den beiden Staubkammern (20) und (12) erfüllt und bei zwei Gittern dient ein erstes Gitter (13a) als Boden der äußeren Staubkammer (20), verbunden mit einem ersten Staubbeutel (14a) und einem zweiten Gitter (13b) dient als Boden der inneren Staubkammer (12), verbunden mit einem zweiten Staubbeutel (14b), so dass das erste Gitter (13a) zusammen mit dem erste Staubbeutel (14a) erfüllt eine Sperrfunktion gegenüber der Atmosphäre und das zweite Gitter (13b) zusammen mit dem zweiten Staubbeutel (14b), erfüllt eine Sperrfunktion zwischen den beiden Staubkammern (20) und (12).

2. Ein filterbasierter Staubsammler nach Anspruch 1, wobei ein kontaminierter Teil des Staubsammlers von einem sauberen Teil getrennt werden kann, indem eine Kupplung (5) freigegeben wird, die zwischen dem verunreinigten und dem sauberen Teil angeordnet ist.

3. Ein filterbasierter Staubsammler nach irgendeines der vorhergehenden Ansprüche, wobei die gesamte kontaminierte Seite aus einem kostengünstigen Einwegmaterial hergestellt ist.

4. Ein filterbasierter Staubsammler nach irgendeines der vorhergehenden Ansprüche, ferner umfassend eine Rückspülanordnung, die aus einem Ventil (11) besteht, das mit einem integrierten Druckbehälter (10) auf einer Seite und einem Hochgeschwindigkeits-Düsenteil (15) auf der Reinseite des Filtermediums (6) in Verbindung steht.

5. Ein filterbasierter Staubsammler nach Anspruch 4, wobei das Ventil (11) von einer programmierbaren PLC-Steuerung gesteuert wird, die die Rückspülfrequenz an die über dem Filtermedium (6) aufgebaute Druckdifferenz anpaßt.

6. Ein filterbasierter Staubsammler nach Anspruch 5, **dadurch gekennzeichnet, dass** die PLC-Steuerung auch ein Entlastungsventil oder ein Sperrventil steuert, wodurch die Druckdifferenz über das Filtermedium kurzzeitig beseitigt wird, wenn das Filtermedium zurückgespült wird.

7. Ein filterbasierter Staubsammler nach Anspruch 5 oder 6, wobei die PLC-Steuerung verwendet wird, um das System durch Steuern der Phasenordnung in der Steckdose ausfallsicher zu machen und die Reihenfolge zu korrigieren, wenn sie falsch ist, und auch die Lüfter- und Motortemperatur direkt oder indirekt zu steuern über den Strom und um den Motor zu stoppen bevor er überhitzt.

8. Ein filterbasierter Staubsammler nach irgendeines der obigen Ansprüche, wobei der Einlaß (2) aus zwei oder mehr Öffnungen besteht, um den Staub um das Filtermedium (6) herum zu verteilen.

9. Ein filterbasierter Staubsammler nach irgendeines der vorhergehenden Ansprüche, wobei der Einlaß (2) mindestens eine Öffnung aufweist, die tangential orientiert ist, um einen zusätzlichen Zykloneffekt zu erzeugen und das Filtermedium (6) in der Nähe des Einlaßes (2) von einer Staubüberlastung befreien.

10. Ein filterbasierter Staubsammler nach irgendeines der obigen Ansprüche, wobei das Filtermedium (6) an dem Ende nahe dem Einlaß (2) einen größeren Durchmesser aufweist, was den Gasfluss beschleunigt und eine bessere Staubverteilung über das Filtermedium (6).gibt

11. Ein filterbasierter Staubsammler nach irgendeines der obigen Ansprüche, ferner mit einer Spiralschaufel (19a), (19b), (19c), die von einer Position (19a) über dem äußeren Einlaß (18) geht und sich nach unten zu einer Position (19c) erstreckt in der äußeren Staubkammer (20), wobei die Staubteilchen, die sich an der Innenwand des Zyklonkörpers (17) angesammelt haben, nach unten gegen die innere Wand in Richtung auf die äußere Staubkammer (20) gedrückt werden, gleichzeitig die Teilchen werden durch den Flügel beschattet und nicht durch den nach oben gerichteten Gasstrom beeinflusst, der den Einlaß (2) anvisiert.

## Revendications

1. Un collecteur de poussière à base de filtre avec fonction de pré-séparation intégrée, consistant en un corps de cyclone externe (17) qui agit en pré-séparateur donnant forme à une chambre de poussière extérieure (20) contenant à l'intérieur un filtre médium 6) positionné dans un corps de filtre (1) qui constitue une chambre intérieure de poussière (12), le corps du filtre possède une entrée (2) destinée à du gaz partiellement purifié et il est relié à une chambre de sortie (3) avec sortie (4) pour du gaz purifié et le filtre (6) séparant les trajets d'écoulement du collecteur de poussière en un côté purifié et en un côté contaminé, et le corps extérieur du cyclone (17) ayant une entrée extérieure (18) pour du gaz contaminé en communication avec l'entrée (2), **caractérisé par** sa combinaison de l'entreposage de poussière faisant fonction d'écluse au moyen d'un sac à poussière (14) aspiré contre une grille (13) pendant l'opération, où deux sacs à poussière, (14a) et (14b), aspirés respectivement contre deux grilles différentes, (13a) et (13b), pendant l'opération ; dans le cas d'une seule grille, celle-ci (13) sert de base à la fois à la chambre à poussière extérieure (14) et à la chambre à poussière intérieure (12), toutes les deux reliées à un sac à poussière commun (14), qui, conjointement avec la grille (13) remplit une fonction d'écluse vers l'atmosphère ainsi qu'entre les deux chambres à poussière, (20) et (12), et, dans le cas de deux grilles, une première grille (13a) sert de base à la chambre à poussière extérieure (20) reliée à un premier sac à poussière (14a), et une deuxième grille (13b) sert de base à la chambre à poussière intérieure (12) reliée à un deuxième sac à poussière (14b), de manière à ce que la première grille (13a), conjointement avec le premier sac à poussière (14a), remplisse une fonction d'écluse vers l'atmosphère, et que la deuxième grille (13b), conjointement avec le deuxième sac à poussière (14b), remplisse une fonction d'écluse entre les deux chambres à poussière, (20) et (12).

2. Un collecteur de poussière à base de filtre conforme à la revendication 1, où une pièce contaminée du collecteur peut être séparée d'une pièce pure en débrayant une charnière de couplage (5) arrangée entre la pièce contaminée et la pièce pure.

3. Un collecteur de poussière à base de filtre conforme à l'une des quelconques revendications précédentes, où le côté contaminé tout entier est fabriqué en un matériel jetable à faible coût.

4. Un collecteur de poussière à base de filtre conforme à l'une des quelconques revendications précédentes, se composant en plus d'un dispositif d'anti-refoulement qui consiste en une valve (11) communicante avec un récipient à pression intégrée (10) d'un côté et une pièce aspirante à haute vitesse du côté pur du filtre médium (6).

5. Un collecteur de poussière à base de filtre conforme à la revendication 4, où la valve (11) est pilotée par un PC de contrôle programmable, qui adapte la fréquence d'écoulement à la différence de pression produite par le filtre médium (6).

6. Un collecteur de poussière à base de filtre conforme à la revendication 5, **caractérisé par le fait que** le PC de contrôle pilote également une soupape ou une valve de blocage éliminant la différence de pression sur le filtre médium durant un bref moment, lorsque le filtre médium est refoulé.

7. Un collecteur de poussière à base de filtre conforme à la revendication 5 ou 6, où le PC de contrôle est utilisé pour garantir la sécurité du système de contrôle de l'ordre des phases dans la prise de courant et pour corriger un mauvais ordre et, en même temps, contrôlant le ventilateur et la température du moteur, de manière directe ou indirecte par l'intermédiaire du courant, et arrêtant le moteur avant qu'il ne surchauffe.

8. Un collecteur de poussière à base de filtre conforme à l'une des quelconques revendications précédentes, où la valve d'entrée (2) consiste en deux ou plusieurs ouvertures, permettant de disperser la poussière autour du filtre médium.

9. Un collecteur de poussière à base de filtre conforme à une quelconque revendication précédente, où la valve d'entrée (2) possède au moins une ouverture orientée tangentiellement, afin de créer un effet cyclonique supplémentaire et qui épargne une surcharge de poussière au filtre médium (6) à proximité de la valve d'entrée (2).

10. Un collecteur de poussière à base de filtre conforme à une quelconque revendication précédente, où le diamètre du filtre médium (6) est plus grand vers son extrémité près de la valve d'entrée (2), ce qui accélère le flot du gaz tout en améliorant la répartition de la poussière sur le filtre médium.

11. Un collecteur de poussière à base de filtre conforme à l'une des quelconques revendications précédentes, disposant en plus d'une aube de guidage à écoulement en spirale (19a), (19b), (19c), d'une position (19a) au-dessus de la valve d'entrée extérieure (18), s'étendant vers le bas à une position (19c) située dans la chambre de poussière extérieure (20) et forçant les particules de poussière accumulées contre le côté intérieur du corps du cyclone (17) à glisser de haut en bas du côté intérieur en direction de la chambre de poussière extérieure (20), en même temps les particules sont protégées par l'aube de guidage et ne sont pas touchées par le flot de gaz se dirigeant vers le haut et visant la valve d'entrée.
